# EUROPEAN PATENT APPLICATION

(11) **EP 1 728 817 A1**
(43) Date of publication of application: **06.12.2006**
(21) Application number: 05253442.7
(22) Date of filing: 03.06.2005
(51) Int. Cl.: C08K 5/00

(54) **Anti-reflective coating for laser beams**

(71) Applicant: RAFAEL - ARMAMENT DEVELOPMENT AUTHORITY LTD., Haifa 31021 (IL)
(72) Inventor: Wasserman, Shula, Kamon 20112 (IL); Breslauer, Edith, Kiriat Tivon 36034 (IL)
(74) Representative: Howick, Nicholas Keith

(57) **Abstract**

The invention provides means for attenuating reflected and/or transmitted laser beams by the application, to the objects on which the laser beams are expected to impinge, of a paint which comprises: (1) a resin binder; and (2) one or more of the following components: (a) a laser dye; (b) a fine powder of conductive particles; (c) a fine powder of semi-conductive particles; (d) an organo-metallic salt dye.

## Description

### Field of the Invention

This invention relates to means for the selective attenuation of reflected, transmitted or stray laser radiation. More specifically, it relates to paints and paint films for the attenuation of such radiation of selected wavelengths.

### Background of the Invention

Due to the extensive utilization of laser beams in modem technology and military systems, the need has arisen for means for attenuating laser radiation, whether reflected, transmitted or stray, at least for attenuating it selectively, viz. within specified, narrow bands of wavelengths.

Examples of techniques in which laser beam attenuation is required are the following.
1. When lasers are used in surgical medicine or for cutting or welding and the like, the operators or observers or patients must wear goggles that provide protection against the transmission of laser light, which might be quite harmful to the human eye. At the same time, the goggles should be transparent to visible light at other wavelengths, in order to afford full view of the proceedings, particularly to the surgeon or the equipment operator.
2. In military systems, the covers of optical components must be opaque to the penetration of powerful laser light, sent by the enemy for the purpose of damaging sensitive sub-systems. At the same time, it is essential that said covers be transparent to electromagnetic radiation having the wavelength at which said optical components operate. Likewise, eyeglasses or visors worn by soldiers must block laser light emitted by an enemy source to damage the soldiers' eyesight.
3. Laser range finders and laser designators are modem devices in which a receiver station collects a laser beam reflected off a target, in order to detect its location and range. Its is highly desirable substantially to reduce the effectiveness, reliability and accuracy of such devices operated by an enemy, and this can be achieved if the reflection from the target at the wavelength of the impinging beam is minimized. At the same time, the reflection of radiation at other wavelengths should not change drastically, so as not to affect other properties which produce desirable effects.
4. The surroundings of operators of laser equipment should not reflect stray laser radiation, as a safety measure for the welfare of personnel and the protection of delicate instrumentation.

The prior art has sought to eliminate or reduce the threat of laser light to the eyes or to instruments by attenuating the reflected or transmitted laser beams to a level below a threshold that depends on the specific application. Active and passive means have been proposed for this purpose.

Typical active means are electro-optical devices, liquid crystal switches or photochromic optical switches.

Passive means comprise thin film coatings applied by vacuum deposition techniques. These, however, have a number of major drawbacks. Their cost is high. They are difficult to repair under field conditions. Further, since they operate on the principle of destructive interference, they are angle-dependent, which means that if they are designed to operate at a given angle of incidence, e.g. a right angle, they may be out of tune at other angles, e.g. acute angles. This is obviously a major operational disadvantage.

El Sayed et al reported in SPIE vol. 1230, page 270 (1990), in "A passive countermeasure for laser range finder", on the use of paints for reducing laser signature. No details as to the composition of the paints are given.

Gentex Inc. manufactures FILTRON laser protective sheets, wherein absorptive dyes are homogeneously dispersed in a variety of polymeric substrates to afford protection against hazards of laser radiation. The application of these products is limited, since they are sheets and not paints.

Near infrared absorbing dyes, which absorb in the infrared and transmit in the visible, are known per se. Epolin Inc. manufactures them under the trade name EPOLITE.

It is a purpose of this invention to provide means for attenuating laser beams, that are free of the disadvantages of the prior art.

It is another purpose of the invention to provide passive means for said purpose, viz. means that do not require the operation of devices, such as special switches or other electro-optical devices, and are therefore free of the operational and economical drawbacks of such active means.

It is a further purpose of the invention to provide such passive means that are easily repaired under field conditions.

It is a still further purpose of the invention to provide such passive means that are operative under a wide range of angles of incidence.

It is a still further purpose of the invention to provide such passive means that achieve the aforesaid purpose and yet are inexpensive.

Other purposes and advantages of the invention will become apparent as the description proceeds.

### Summary of the Invention

The invention provides means for attenuating reflected and/or transmitted laser beams by the application, to the objects on which the laser beams are expected to impinge, of a paint which comprises:
1 - A resin binder;
2 - One or more of the following components:
   a - a laser dye,
   b - a fine powder of conductive particles,
   c - a fine powder of semi-conductive particles,
   d - an organo-metallic salt dye.

If it is desired to obtain protection against laser radiation the wavelength of which may vary within a certain range, a number of corresponding components 2a - to 2d - may be used together.

The laser dyes are preferably chosen from among photostable infrared laser dyes which are commonly aromatic hydrocarbons in nature, possibly with rings having O, S or N atoms. They should absorb strongly at the wavelength of the threat posed by the laser beam, and should fluoresce/phosphoresce at longer wavelengths which lie outside their absorption bands. They should preferably be in an amount over 0.5-1% by weight of the solid binder.

The conductive pigments should preferably have particle size below 5µ and should be in an amount of 5-10% by weight of the solid binder. If the pigment is a metal powder, it should preferably have particle size below 0.2µ and should be in an amount over 4% by weight of the paint. They are preferably chosen from among powders of aluminum, nickel, silver, carbon black, graphite, or the like.

The semi-conductive pigments should preferably have particle size below 3µ and should be in an amount over 10% by weight of the paint. They are preferably chosen from among powders of lead sulfide, zinc sulfide, indium antimonide or the like.

The organo-metallic salt dyes should absorb strongly at the wavelength of the threat posed by the laser beam, and should preferably be in an amount not less than 0.5% and more preferably not more than 7% by weight of the solid binder.

The resin binder can be any common paint system binder, e.g. alkyd, PVA emulsion, epoxy, acrylic or polyester. Such binders are well known per se to persons skilled in the art. Other ingredients that are used as additives, are, e.g., wetting agents, whose main role is to ease grinding of the powders into the liquids, anti-skinning agents, which are anti-oxidizers and prevent skin formation, dryers, solvents, etc.

### Detailed Description of Preferred Embodiments

The following is a reference example illustrating what occurs when the invention is not applied.

### Reference Example

A standard commercial synthetic alkyd based paint (mat, yellow dust color) was applied on sand blasted aluminum and the hemispherical reflection was measured under illumination by a 1.06µ laser beam. A reflection value (viz. the percentage of the radiation that is reflected from the surface and is detected by a detector operating at the same wavelength) of 14% was obtained.

Some non-limitative examples of paints according to the invention will now be given. It should be noted that the determining factor of the coating efficiency is the proportional amount by which it reduces reflectance, and not the absolute reflectance values. All the following examples refer to the reduction of the measured reflectance of the standard coating mentioned in the Reference Example. The same proportion of reduction would have been achieved if the coating had been applied on a bare metal or on any other substrate.

### Example 1

The following paint was formulated:

| | |
|---|---|
| Medium soybean alkyd | 65% ww |
| Conductive Carbon Black (e.g. Ketchenblack EC) | 2% ww |
| Xylene | 25% ww |
| Metallic naphthenate dryers | 5% ww |
| Wetting agent | 1% ww |
| Anti-skin agent | 2% ww |

The above paint was applied over the same reference paint applied on the same metal as in the Reference Example, in a layer of 15-30µ, and the hemispherical reflection was measured under illumination by a 1.06µ laser beam. A reflection value of 5% was measured, evidencing the beneficial effect provided by the paint according to the invention in reducing reflection.

### Example 2

The following paint was formulated:

| | |
|---|---|
| Medium soybean alkyd | 80% ww |
| Laser Dye (e.g. Exciton IR-26) | 0.1% ww |
| Xylene | 10% ww |
| Metallic naphthenate dryers | 5% ww |
| Wetting agent | 1% ww |
| Anti-skin agent | 2% ww |

The above paint was applied over the same reference paint applied in a layer of 10-20 µ on the same metal as in the Reference Example and the hemispherical reflection was measured under illumination by a 1.06µ laser beam. A reflection value of 10% was measured, evidencing the beneficial effect provided by the paint according to the invention in reducing reflection.

### Example 3

The following paints were formulated:

| | |
|---|---|
| Medium soybean alkyd | 80-90% ww |
| Organo-metallic Salt Dye | 1.5-3% ww |
| Acetone | 6-20% ww |
| Metallic naphthenate dryers | 5-8% ww |
| Anti-skin agent | 2% ww |

Six different Epolite(R) dyes, listed below, were used as organo-metallic salt dyes in this Example. The above paints were applied over the same reference paint, in layers ranging from 10µ to 50µ, applied on the same metal as in the Reference Example and the hemispherical reflection was measured under illumination by a 1.06µ laser beam. Listed below are the reflection values measured for the paints comprising each one of the aforesaid six dyes, which values evidence the beneficial effect provided by the paint according to the invention in reducing reflection:

| | |
|---|---|
| dye No. 1: (Epolite (R) IV-67) | 3.5-4.2 % |
| dye No. 2: (Epolite (R) III-117) | 4.0-6.0 % |
| dye No. 3: (Epolite (R) III-189) | 3.7-4.7 % |
| dye No. 4: (Epolite (R) III-184) | 3.0-3.5% |
| dye No. 5: (Epolite (R) III-192) | 3.7-4.6 % |
| dye No. 6: (Epolite (R) III-57) | 3.8-4.7 % |

Reflectance was similar in all measured thicknesses, and no dependence on thickness was observed at the used concentrations.

### Example 4

The following paint was formulated:

| | |
|---|---|
| Medium soybean alkyd | 70% ww |
| Lead Sulfide | 11.5% ww |
| Xylene | 10% ww |
| Metallic naphthenate dryers | 5% ww |
| Wetting agent | 1% ww |
| Anti-skin agent | 2% ww |

The above paint was applied over the same reference paint, in a layer of 15-40µ, applied on the same metal as in the Reference Example and the hemispherical reflection was measured under illumination by a 1.06µ laser beam. A reflection value of 5.5% was measured, evidencing the beneficial effect provided by the paint according to the invention in reducing reflection.

While embodiments of the invention have been described by way of illustration, it will be apparent that the invention may be carried out by persons skilled in the art with modifications, variations and adaptations, without departing from its spirit or exceeding the scope of the claims.

## Claims

1. As a means for attenuating reflected and/or transmitted laser beams by the application, to the objects on which the laser beams are expected to impinge, a paint which comprises:
1 - A resin binder;
2 - At least one of the following components:
a - a laser dye,
b - a fine powder of conductive particles,
c - a fine powder of semi-conductive particles,
d - an organo-metallic salt dye.

2. Paint according to claim 1, for obtaining protection against laser radiation the wavelength of which may vary within a certain range, comprising a plurality of corresponding components 2a - to 2d-.

3. Paint according to claim 1, wherein the laser dyes are chosen from among photostable, aromatic hydrocarbon, infrared laser dyes.

4. Paint according to claim 1, wherein the laser dyes are chosen from among photostable, heteroaromatic hydrocarbon, infrared laser dyes, having O, S or N ring atoms.

5. Paint according to claim 1, wherein the laser dyes are strongly absorbent at the wavelength of the threat posed by the laser beam.

6. Paint according to claim 1, wherein the laser dyes are chosen from among dyes that do not fluoresce/phosphoresce at wavelengths longer than those comprised in their absorption bands.

7. Paint according to claim 1, wherein the laser dyes are in an amount over 0.1% by weight of the paint.

8. Paint according to claim 1, wherein the conductive pigment has particle size below 5µ and is in an amount over 4% by weight of the paint

9. Paint according to claim 6, wherein the conductive pigment is a metal powder, has particle size below 0.2µ and is in an amount over 4% by weight of the paint.

10. Paint according to claim 1, wherein the semi-conductive pigment has particle size below 3µ and is in an amount over 10% by weight of the paint.

11. Paint according to claim 1, wherein the organo-metallic salt dye is strongly absorbent at the wavelength of the threat posed by the laser beam, and is in an amount not less than 0.5% by weight of the paint.

12. Paint according to claim 11, wherein the organo-metallic salt dye is in an amount of not more than 7% by weight of the paint.

13. Paint according to claim 1, wherein the conductive pigments are chosen from among carbon black, graphite powder, aluminum, nickel or silver powders.

14. Paint according to claim 1, wherein the semi-conductive pigments are chosen from among lead sulfide, zinc sulfide or indium antimonide powders.

15. Method of attenuating reflected and/or transmitted laser beams from objects on which the laser beams impinge by the application, which comprises applying to said objects a layer of a paint comprising:
1 - A resin binder;
2 - At least one of the following components:
a - a laser dye,
b - a fine powder of conductive particles,
c - a fine powder of semi-conductive particles,
d - an organo-metallic salt dye.

16. As a means for attenuating reflected and/or transmitted laser beams by the application, to the objects on which the laser beams are expected to impinge, a paint substantially as described.

17. Method of attenuating reflected and/or transmitted laser beams from objects on which the laser beams impinge by the application substantially as described.
